# EUROPEAN PATENT SPECIFICATION

(11) **EP 0 582 420 B1**
(45) Date of publication and mention of the grant of the patent: **13.08.1997**
(21) Application number: 93305892.7
(22) Date of filing: 26.07.1993
(51) Int. Cl.: G02B 26/10

(54) **Multi spi resolution flying spot raster scanner**
Lichtpunktabtaster mit verschiedener Rasterpunktauflösung
Appareil de balayage à réseau par point lumineux mobile à résolution différente

(30) Priority: 03.08.1992 US 923639
(43) Date of publication of application: 09.02.1994
(73) Proprietor: XEROX CORPORATION, Rochester New York 14644 (US)
(72) Inventor: Garcia, Kevin J., Tucson, Arizona 85715 (US); Harris, Ellis D., Claremont California 91711 (US)
(74) Representative: Goode, Ian Roy

(56) References cited:
- GB-A- 2 180 684
- US-A- 4 682 244
- PATENT ABSTRACTS OF JAPAN vol. 16, no. 35 (P-1304) 28 January 1992 & JP-A-03 243 909 (RICOH CO LTD) 30 October 1991
- PATENT ABSTRACTS OF JAPAN vol. 14, no. 558 (P-1141) 12 December 1990 & JP-A-02 238 424 (RICOH CO LTD) 20 September 1990

## Description

This invention relates to a flying spot raster scanner, and, more particularly, to a rotatable aperture for a flying spot, raster scanner optical system which adjusts the spots per inch resolution along the scan line in the scan and cross-scan axes by adjusting the size of the imaged spot or pixel along the scan line.

Flying spot raster scanners contained in the prior art have a light source, such as a laser, which emits a coherent light beam. The light is collimated in both the scan or tangential axis and in the cross-scan or sagittal axis by multiple optical elements. The collimated light is focussed in the cross-scan plane by a cylindrical optical element at a point near a facet of a rotating polygon mirror while remaining collimated in the scan plane.

The reflected light revolves about an axis near the center of rotation of the rotating polygon mirror and is focussed in the scan plane by spherical lenses and a cylindrical wobble correction mirror to scan along a line. This reflected light can be utilized to scan a document at the input end of an imaging system as a raster input scanner or can be used to impinge upon a photosensitive medium, such as a xerographic drum, in the output mode as a raster ouput scanner.

The imaged spots or pixels extend along the scan line. Adjusting the pixels in the scan axis will change the width of the pixels and thus alter the number of spots per inch resolution along the scan line. Adjusting the imaged pixels in the cross-scan axis will change the height of the pixels and thus alter the number of scan lines per inch along the perpendicular to the scan line.

The number of pixels per inch along a scan line and the number of scans per inch are set by the optical scanning system parameters.

The spot sizes at the scan line are fixed in the cross-scan or sagittal axis but can be varied in the scan or tangential axis. If the raster output scanner optical system is required to change resolutions in the cross-scan axis, it is most commonly done by switching a new cylindrical optical element into the beam's path before the polygon mirror while withdrawing the previous cross-scan focussing cylindrical optical element. This optical element replacement requires a complicated and precision mechanical assembly to accomplish this task.

Raster scanners, both input and output, currently available on the market offer a single resolution for printing. The most common resolutions are 9.4, 12, 15.7, 19 and 24 spots per mm (240, 300, 400, 480 and 600 spots per inch (spi)). The machine resolution is driven not only by the market need of the scanners, but by the required performance for the scanners and by the cost of the scanners and also by corporate strategy. For example, IBM Corporation uses a 9.4 and 19 spots/mm (240 and 480 spi) standard while Xerox Corporation uses a 12 and 15.7 spots/mm (300 and 400 spi) standard. Therefore, interchangeability between scanners with different printing resolutions becomes a problem.

Historically, the interchangeability problem was solved by using software interpolation programs to convert from one resolution to another. However, these software programs allow adjustable resolution in the scan axis only. It is desireable from a cost and customer satisfaction point of view to be able to adjust the resolution in both the scan and cross- scan axes. As performance requirements for the raster scanner change, causing the number of scans per inch to change, the sagittal optical spot size must be adjusted. In this fashion, only limited software and hardware would be needed to interconnect raster output scanners with different resolutions.

It is an object of this invention to provide mechanical means to adjust the resolution of a flying spot raster scanner along the scan line in both the scan and cross- scan axes.

The present invention provides a raster output scanning optical system according to claim 1 of the appended claims.

In accordance with the present invention, a rotatable aperture is positioned between the pre-polygon cross-scan cylidrical optical element and the rotating polygon mirror of a laser diode flying spot raster scanner optical system. Rotating the aperture about a line parallel to the axis in the scan or tangential plane adjusts the imaged spot size thus maintaining resolution in the scan and cross-scan axes of the raster scanner optical system.

Other objects and attainments together with a fuller understanding of the invention will become apparent and appreciated by referring to the following description and claims taken in conjunction with the accompanying drawings.

Figure 1 is a schematic illustration of the cross-section side view of the flying spot raster scanner optical system with a rotatable aperture for adjusting the spot size along the scan line in the scan and cross-scan axes, formed according to the present invention.

Figures 2A, 2B and 2C are schematic illustrations of the rotatable aperture of the flying spot, raster output scanner optical system of Figure 1, from different perspectives.

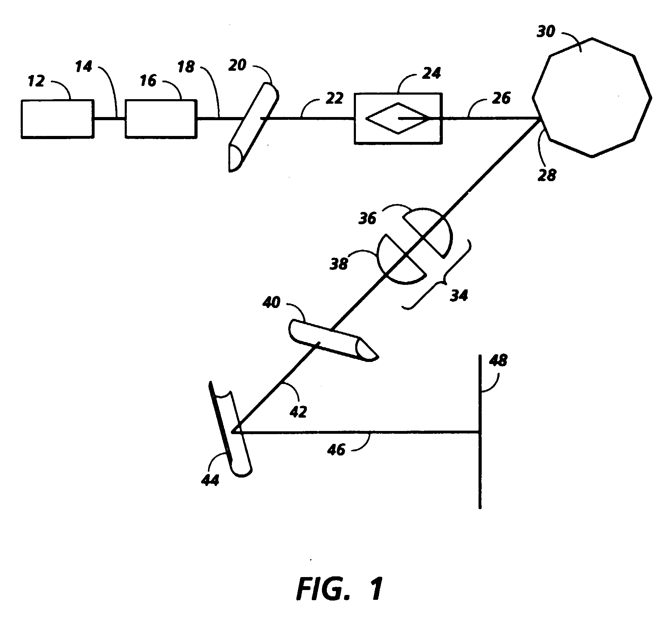

Reference is now made to Figure 1 wherein there is disclosed a flying spot raster scanning optical system 10. A laser diode light source 12 emits a coherent light beam 14 which is collimated in both the scan and cross-scan planes by a multi-element optical collimator 16. The resulting collimated beam 18 passes through a cross-scan cylindrical lens 20. The lens 20 is cylindrical in the cross-scan plane and plano in the scan plane. Thus, the lens converges the cross-scan portion of the beam while maintaining the collimation of the scan portion of the beam.

The cross-scan plane converging, scan plane collimated beam 22 then passes through a rotatable aperture 24 which may selectively block or vignette the outer regions of the beam 22. The apertured beam 26 is still converging in the cross-scan plane from the cross-scan cylindrical lens 20 which focuses the beam on a facet 28 of a multi-faceted rotating polygon mirror 30 while the scan plane portion of the beam 26 remains collimated when the beam strikes the facet.

The beam 32 reflected from the facet 28 is still collimated in the scan plane and is now diverging in the cross-scan plane. The reflected beam 32 then passes through an t-theta scan lens 34 consisting of a negative plano-spherical lens 36 and a positive plano-spherical lens 38. This f-theta scan lens configuration converges the beam in the scan or tangential axis. The beam then passes through a cross-scan cylindrical lens 40.

The lens 40 is cylindrical in the cross-scan plane and plano in the scan plane. The cross-scan cylindrical lens aids the f-theta lens in producing a field in the scan plane, thus the f-theta scan lens together with the cross-scan cylindrical lens produces a linear, flat-field scan beam. The f-theta lens should be designed with the cross-scan cylindrical lens 40 in mind because the cross-scan cylindrical lens may contribute a small, but non-negligible, amount of distortion, especially at large scan angles.

After passing through the cross-scan cylindrical lens 40, the beam 42 is then reflected off a cylindrical wobble correction mirror 44. The mirror 44 is positive and cylindrical in the cross-scan plane and flat in the scan plane. Thus, the wobble mirror converges the previously diverging cross-scan portion of the beam 42 but allows the converging cross-scan portion of the beam 42 focused by the lens 34 to pass through unaffected.

The reflected beam 46 is focussed onto a photoreceptor or a scan line 48 by the mirror 44 which converges the cross-scan portion of the beam 46 and by the lens 40 which converges the scan portion of the beam 46.

The cross-scan cylindrical lens 20 and the rotatable aperture 24 of the raster output scanner system 10 are utilized to change the light beam spot size of the raster scanner system in the cross-scan or sagittal axis. The aperture 24 is located between the cylindrical optical element 20 and the polygon mirror 30.

For flying spot raster scanning systems which require a spot size change in the cross-scan or sagittal axis, the aperture is rotated about a line parallel to the axis in the scan or tangential plane. The laser diode on-time is controlled to change spot size in the scan or tangential axis.

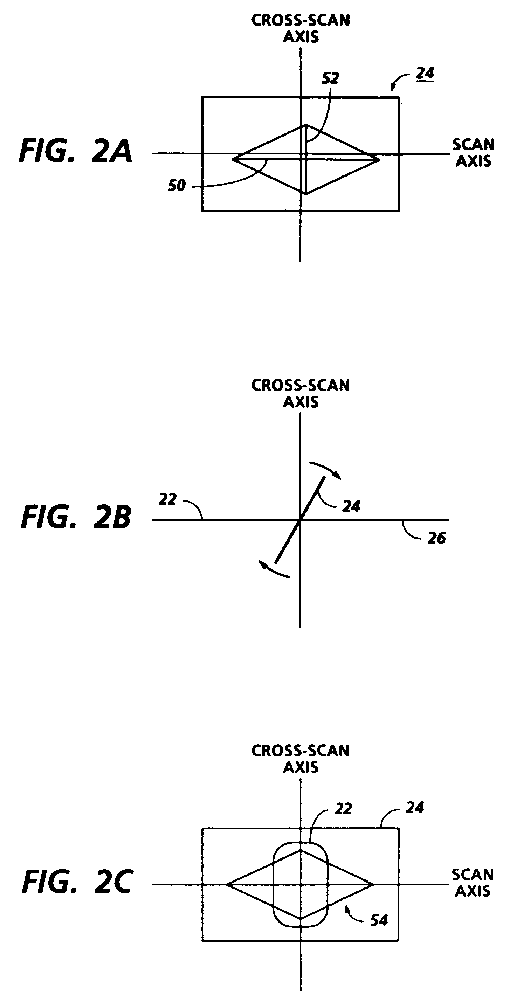

In order to prevent a spot size change in the scan axis, the aperture must be rotationally symmetric about this scan axis. The diamond-shaped aperture 24 of Figure 2A was chosen as the aperture geometry in this illustrative example of Figure 1. Other geometries, such as an ellipse, with similar rotational symmetries would be suitable for the aperture.

As shown in Figure 2A, the diamond-shaped aperture 24 has a major or long axis 50 along the scan axis and a minor or short axis 52 along the cross-scan axis. The cross-scan plane converging, scan plane collimated beam 22 is shown passing through the aperture 24. The aperture is rotatable around the major axis along the scan axis.

As best seen in Figure 2B, the aperture 24 can be rotated at an angle to the cross-scan plane to vignette beam 22 into beam 26. As shown in Figure 3C, the rotated aperture 24 presents a smaller cross-section to beam 22 so that selective portions of the beam are blocked by the area 54 surrounding the aperture 24. The diamond aperture can be considered the convolution of two rectangular apertures. In the tangential or scan axis, the light is a nearly Gaussian apodized collimated beam which illuminates the diamond aperture.

This diamond aperture configuration is a Fourier transforming configuration in which the amplitude is the Fourier transform of the illuminated object multiplied by a phase factor. If, in general, the aperture dimension is small compared to the Gaussian apodization and the light is collimated, the illumination can be considered nearly planar and the resulting Fourier transform is that of the aperture itself. Thus, the amplitude at the scan line would be the Fourier transform of the convolution of two rectangle functions which are sinc functions multipled by appropriate phase factors. The resulting irradiance pattern would be proportional to a sinc² function. The side lobes associated with this type of function are suppressed greatly which results in increased contrast ratio in raster scanner systems.

In the current raster scanner design, the tangential fan of rays are coplanar to the scan plane. When the aperture exceeds the beam size, the irradiance pattern will be that of the raw Gaussian beam and there will be no side lobes. As the aperture is rotated, the beam will be vignetted resulting in a change in spot size at the scan plane, and possibly the introduction of side lobes. The diamond shape will eliminate side lobes as explained above.

The Fourier transforming properties of the rays in the sagittal axis are more complicated. The first transforming configuration is that of an object placed behind the sagittal cylinder plumbing lens element 20. This transform, up to a quadratic phase factor, is the Fourier transform of that portion of the aperture illuminated by the nearly apodized Gaussian beam. The image forms the object of the scan lens transform. This computation is actually the convolution of the impulse response of the system with the image predicted by geometrical optics. The impulse response of the system is simply the Fourier transform of the pupil function of the scan lenses in the sagittal axis. The geometrical image is the perfect image of the object, i.e. no diffraction effects included. The sagittal irradiance pattern, at the photoreceptor plane is numerically determined to be very nearly Gaussian in shape.

The use of a rotatable aperture to adust the resolution of a raster scanning optical system is simply qualitative in nature and is not exact for two major reasons. First, the output from the laser diodes is not a Gaussian beam. However, laboratory data indicates that the sagittal axis is very nearly Gaussian, and the tangential axis is very nearly Gaussian if the aperture stop does not heavily vignette the beam. Therefore, a Gaussian beam apodization used to model the system is a valid assumption. Second, it is implicitly assumed that the resolution problem can be separated into orthogonal components and each axis treated separately. This is true in general for symmetric and some asymmetric Gausssian beams but not for systems which are coupled. Due to vignetting by the aperture, the beam sizes and apodizations in one axis effect somewhat the optical properties in the other axis and therefore this system is coupled.

As mentioned previously, other aperture geometries could be used in the same manner. For example, an elliptical aperture can be considered the convolution of two circular apertures. However, the optical effect that such an aperture imparts to the beam will be vary somewhat from that of the diamond aperture.

The long axis of the diamond shaped aperture need not be along the scan axis. The short axis can be along the scan axis and the long axis would be the one rotated.

In operation, the on-time of the laser diode is controlled to change spot size in the scan or tangential axis. However, the aperture can be rotated along the cross-scan or sagittal axis to change the spot size in the scan or tangential axis. The aperture can be rotated along both scan and cross-scan axes to change the spot size in both axes along the scan line, adjusting both the length and height of the pixel and thus both the spots per inch resolution and the scans per inch.

The diamond-shaped aperture was designed into a flying spot raster output scanning system which required switching the sagittal spot size from 12 to 15.7 spots/mm (300 to 400 spi). The diamond aperture is effectively an object in front of a thin lens with an effective focal length of 329.0 mm, i.e. the scan lenses.

The theoretical spot size for a 2.4 x 9 mm diamond-shaped aperture ROS optical system design with 15.7 spots/mm (400 spi) spot size when the aperture is at zero degrees is 63.5 µm (to the 1/e² intensity point) in the cross-scan or sagittal axis and 44.7 µm in the scan or tangential axis. When the aperture is rotated 46 5 degrees to obtain the 12 spots/mm (300 spi) spot size, the theoretical spot size is 84.9 µm in the cross-scan or sagittal axis and 45.9 µm in the scan or tangential axis.

The power loss due to rotating the aperture is approximately 30%. This power loss can be compensated for by increasing the output power of the laser diode initial light source. The focal positions for all cases is within 0.5 mm of the photoreceptor plane.

The actual hardware was built to verify the validity of the design. The results from this hardware show with the aperture at zero degrees for 15.7 spots/mm (400 spi), the actual spot size is 65.9 µm in the cross-scan or sagittal axis and 46.6 µm in the scan or tangential axis. When the aperture is rotated 46.5 degrees to obtain the 12 spots/mm (300 spi) spot size, the actual spot size is 87.6 µm in the cross-scan or sagittal axis and 47.1 µm in the scan or tangential axis.

The power loss due to the rotating aperture was measured to be approximately 35%. The focal positions were within 0.75 mm of the photoreceptor plane.

The aperture was further rotated to 52.5 degrees which resulted in a spot size equivalent to a 9.4 spotsimm (240 spi) system resolution with a spot size of 105.2 µm in the cross-scan or sagittal axis and 48.1 µm in the scan or tangential axis. This further rotation amounted to an additionai power loss of 40%.

## Claims

1. A flying spot raster output scanning optical system having an adjustable resolution of a scan beam along the scan line comprising:
a laser diode source (12) which, in use, emits a coherent light beam (14),
collimating means (16), for collimating said emitted light beam,
first optical means (20) for converging said collimated beam (18) in the cross scan direction,
a rotatable aperture (24) adapted for adjusting the resolution of said scan beam along said scan line (48), the rotation of the aperture (24) causing selective blocking of regions of said light beam (22) from said first optical means (20),
a rotating polygon mirror (30) with a plurality of facets (28) for reflecting said beam (26) from said rotatable aperture (24); and
second optical means (40) for converging the scan and cross-scan portions of the reflected beam (42) to form a scan beam (46) along said scan line (48).

2. The system of claim 1, wherein the rotatable aperture is moveable to a plurality of positions, each position corresponding to a different resolution of the system.

3. The system of claim 1 or 2, wherein said rotatable aperture (24) is rotatable about a line (52) parallel to the axis in the scan plane of said system.

4. The system of claim 1, 2 or 3, wherein said rotatable aperture (24) has a rotational symmetry about said line (52) parallel to the axis in the scan plane of said system.

5. The system of any of the preceding claims, wherein said rotatable aperture (24) is diamond shaped.

6. The system of any of the preceding claims, wherein said rotatable aperture (24) is elliptical shaped.

7. The system of claim 1, wherein rotation of said rotatable aperture (24) will produce resolutions of 15.7, 12 or 9.4 spots/mm (400, 300 or 240 spots per inch).

8. The system of claim 1, wherein non-rotation of said rotatable aperture (24) will produce resolution of 15.7 spots/mm (400 spots per inch), and rotation of said rotatable aperture by 46.5 or 52.5 degrees will produce resolution of 12 spots/mm (300 spots per inch), or 9.4 spots/mm (240 spots per inch), respectively.

## Revendications

1. Dispositif optique de balayage de sortie de trame à point lumineux mobile ayant une résolution ajustable du faisceau de balayage le long de la ligne de balayage comprenant :
une source à diode laser (12), laquelle durant l'utilisation, émet un faisceau de lumière cohérente (14),
un moyen collimateur (16) pour collimater ledit faisceau de lumière émis,
un premier moyen optique (20) pour faire converger ledit faisceau collimaté (18) suivant la direction de balayage transversal,
une ouverture rotative (24) conçue pour ajuster la résolution dudit faisceau de balayage le long de ladite ligne de balayage (48), la rotation de l'ouverture (24) provoquant un blocage sélectif des zones dudit faisceau de lumière (22) provenant dudit premier moyen optique (20),
un miroir rotatif en forme de polygone (30) ayant une pluralité de facettes (28) pour réfléchir ledit faisceau (26) provenant de ladite ouverture rotative (24), et
un second moyen optique (40) pour faire converger les parties de balayage et de balayage transversal du faisceau réfléchi (42) pour former un faisceau de balayage (46) le long de ladite ligne de balayage (48).

2. Dispositif selon la revendication 1, dans lequel l'ouverture rotative peut être déplacée à une pluralité de positions, chaque position correspondant à une résolution différente du dispositif.

3. Dispositif selon la revendication 1 ou 2, dans lequel ladite ouverture rotative (24) peut tourner autour d'une ligne (52) parallèle à l'axe du plan de balayage dudit dispositif.

4. Dispositif selon la revendication 1, 2 ou 3, dans lequel ladite ouverture rotative (24) présente une symétrie de rotation autour de ladite ligne (52) parallèle à l'axe du plan de balayage dudit dispositif.

5. Dispositif selon l'une quelconque des revendications précédentes, dans lequel ladite ouverture rotative (24) est en forme de diamant.

6. Dispositif selon l'une quelconque des revendications précédentes, dans lequel ladite ouverture rotative (24) est en forme d'ellipse.

7. Dispositif selon la revendication 1, dans lequel la rotation de la dite ouverture rotative (24) va réaliser des résolutions de 15,7, 12 ou 9,4 points lumineux/mm (400, 300 ou 240 points lumineux par pouce).

8. Dispositif selon la revendication 1, dans lequel la non-rotation de ladite ouverture rotative (24) va réaliser une résolution de 15,7 points lumineux/mm (400 points lumineux par pouce), et la rotation de ladite ouverture rotative de 46,5 ou de 52,5 degrés va réaliser respectivement une résolution de 12 points lumineux/mm (300 points lumineux par pouce ou de 9,4 points lumineux/mm (240 points lumineux par pouce).

## Patentansprüche

1. Lichtpunkt-Rasterausgabe-Abtast-Optiksystem mit veränderlicher Auflösung eines Abtaststrahls entlang der Abtastzeile, das umfaßt:
eine Laserdiodenquelle (12), die in Funktion einen kohärenten Lichtstrahl (14) emittiert,
eine Kollimationseinrichtung (16), die den emittierten Lichtstrahl kollimiert,
eine erste optische Einrichtung (20), die den kollimierten Strahl (18) in der Abtastquerrichtung sammelt,
eine drehbare Blende (24), die die Auflösung des Abtaststrahls entlang der Abtastzeile (48) verändert, wobei die Drehung der Blende (24) selektives Blockieren von Bereichen des Lichtstrahls (20) von der ersten optischen Einrichtung (20) bewirkt,
einen sich drehenden Polygonspiegel (30) mit einer Vielzahl von Facetten (28), der den Strahl (26) von der drehbaren Blende (24) reflektiert; und
eine zweite optische Einrichtung (40), die die Abtast- und Abtastqueranteile des reflektierten Strahls (42) sammelt und einen Abtaststrahl (46) entlang der Abtastzeile (48) erzeugt.

2. System nach Anspruch 1, wobei die drehbare Blende in eine Vielzahl von Positionen bewegt werden kann, die jeweils einer anderen Auflösung des Systems entsprechen.

3. System nach Anspruch 1 oder 2, wobei die drehbare Blende (24) um eine Linie (52) parallel zur Achse in der Abtastebene des Systems gedreht werden kann.

4. System nach Anspruch 1, 2 oder 3, wobei die drehbare Blende (24) eine Drehsymmetrie um die Linie (52) parallel zur Achse in der Abtastebene des Systems herum hat.

5. System nach einem der vorangehenden Ansprüche, wobei die drehbare Blende (24) rhombisch geformt ist.

6. System nach einem der vorangehenden Ansprüche, wobei die drehbare Blende (24) elliptisch geformt ist.

7. System nach Anspruch 1, wobei Drehung der drehbaren Blende (24) Auflösungen von 15,7, 12 oder 9,4 Punkten/mm (400, 300 oder 240 Punkte pro Inch) erzeugt.

8. System nach Anspruch 1, wobei Nichtdrehung der drehbaren Blende (24) eine Auflösung von 15,7 Punkten/mm (400 Punkte pro Inch) erzeugt, und Drehung der drehbaren Blende um 46,5 oder 52,5 Grad eine Auflösung von 12 Punkten/mm (300 Punkte pro Inch) bzw. 9,4 Punkten/mm (240 Punkte pro Inch) erzeugt.
